(19) Europäisches Patentamt
European Patent Office
Office européen des brevets

(11) Veröffentlichungsnummer: **0 050 228**
**B1**

(12) # EUROPÄISCHE PATENTSCHRIFT

(45) Veröffentlichungstag der Patentschrift: **04.01.84**

(51) Int. Cl.³: **A 01 N 25/30**

(21) Anmeldenummer: **81107486.3**

(22) Anmeldetag: **21.09.81**

(54) **Verwendung von alkoxylierten Verbindungen als nichtionische Emulgatorkomponente in Pflanzenschutzmittelformulierungen.**

(30) Priorität: **22.10.80 DE 3039770**

(43) Veröffentlichungstag der Anmeldung: **28.04.82 Patentblatt 82/17**

(45) Bekanntmachung des Hinweises auf die Patenterteilung: **04.01.84 Patentblatt 84/1**

(84) Benannte Vertragsstaaten: **BE DE FR GB IT NL**

(56) Entgegenhaltungen:
**EP - A - 0 009 126**
**DE - A - 2 937 224**
**US - A - 2 696 453**

(73) Patentinhaber: **BASF Aktiengesellschaft, Carl-Bosch-Strasse 38, D-6700 Ludwigshafen (DE)**

(72) Erfinder: **Kleuser, Dieter, Dr., Pierstrasse 4, D-6710 Frankenthal (DE)**
Erfinder: **Oppenlaender, Knut, Dr., Otto-Dill-Strasse 23, D-6700 Ludwigshafen (DE)**
Erfinder: **Krapf, Heinz, Dr., In der Schleit, D-6718 Gruenstadt (DE)**
Erfinder: **Stork, Karl, Dr., Reutersgarten 1, D-6840 Lampertheim (DE)**
Erfinder: **Strickler, Rainer, Dr., Schroederstrasse 14, D-6900 Heidelberg (DE)**
Erfinder: **Faulhaber, Gerhard, Dr., Seebacher Strasse 47, D-6702 Bad Duerkheim (DE)**

**EP 0 050 228 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verwendung von alkoxylierten Verbindungen als nichtionische Emulgatorkomponente in Pflanzenschutzmittelformulierungen

Pflanzenschutzmittel, wie Insecticide, Herbizide, Fungizide oder Acarizide werden von wenigen Ausnahmen abgesehen nicht als 100%ige Substanz auf die zu schützenden Kulturpflanzen gebracht, sondern in Form gebrauchsfertig verdünnter Formulierungen. Eine sehr häufige Formulierungsform stellen sogenannte Emulsionskonzentrate dar, die neben dem in Wasser unlöslichen Wirkstoff und einem Lösungsmittel spezielle Emulgatoren oder Emulgatormischungen enthalten, die eine spontane Emulgierung des Konzentrats bewirken. Es bildet sich dann eine Öl-in-Wasser-Emulsion, d,h. das Lösungsmittel, in dem der Wirkstoff gelöst ist, liegt in Form kleiner Tröpfchen als innere Phase des Systems vor. Andererseits kann der Wirkstoff auch ohne Lösungsmittel in Wasser direkt dispergiert werden, wofür ebenfalls Hilfsstoffe – in diesem Falle Dispergatoren – erforderlich sind.

Aus der Literatur sind zahlreiche Emulgatoren und Dispergatoren für alle möglichen Zwecke bekannt geworden und es sei beispielsweise die DE-AS 10 44 523 genannt, in der Mischungen aus Alkylphenolalkoxylaten und Sulfonsäure solcher Phenoläther als Emulgatorsystem für Pflanzenschutzmittel beschrieben sind.

Aus der DE-AS 20 53 356 sind Zweikomponenten-Emulgatorsysteme bekannt, die den obengenannten Erfordernissen schon recht nahe kommen. Es handelt sich um Gemische aus Erdalkalimetall-Alkylaryl-Sulfonaten und ethoxylierten und anschliessend propoxilierten Alkylphenolen.

«In der US-PS 2 696 453 wird ein Zweikomponenten-Emulgatorsystem aus einem Äther oder Thioäther eines Polyoxyalkylenglykols, insbesondere Polyoxyethylen- oder Polyoxypropylenglykols, und einem Erdalkalimetallsalz einer alkylierten Benzolsulfonsäure für in der Landwirtschaft verwendete Zubereitungen beschrieben.»

Dieses Prinzip nichtionogene und anionische Tenside gemischt anzuwenden, hat in zahlreichen weiteren Publikationen seinen Niederschlag gefunden – es ermöglicht bei relativ geringen Einsatzmengen in den meisten Fällen die erwähnte Spontanemulgierung.

Bei der Auswahl der nichtionischen Komponente müssen mehrere Faktoren berücksichtigt werden. Zunächst muss geprüft werden, ob der betreffende Stoff eine für möglichst viele Pflanzenschutzmittel bzw. deren Lösungen genügende Emulgierkraft besitzt, und auch die Lagerstabilität der gebrauchsfertigen verdünnten Präparate gewährleistet ist, d.h. dass nicht während der Behandlung der Pflanzen die Brühen aufrahmen und somit eine gleichmässige Verteilung des Wirkstoffs nicht mehr erfolgen kann.

Weiter muss gerade bei Pflanzenschutzmitteln, die im allgemeinen empfindliche und bisweilen hochreaktive Stoffe darstellen, ein besonderes Augenmerk auf mögliche chemische Wechselwirkungen des Emulgators mit dem Wirkstoff gerichtet werden, da sonst die Wirkung des Mittels verloren geht oder toxisch auf die Pflanze selbst einwirkt, und schliesslich muss sich der Emulgator selbst nichttoxisch gegenüber den zu behandelnden Pflanzen verhalten.

Auf einen kurzen Nenner gebracht heisst das, dass es keinenfalls selbstverständlich sein kann, dass z.B. für andere industrielle Zwecke bekannte Emulgatoren, die zur Bildung von Öl-in-Wasser-Emulsionen befähigt sind, nun auch zur Formulierung von Pflanzenschutzmitteln die geeigneten Emulgierhilfsmittel darstellen.

Eine reine induktiv orientierte Forschung ist auf diesem Gebiete nicht möglich; Ergebnisse die befriedigen, können nur auf empirischem Wege erzielt werden, und erfordern zeitraubende Versuche und ein sorgfältiges «screening».

Weiterhin muss Sorge getragen werden, dass dem Formulierer mehrere Emulgatorsysteme zur Verfügung stehen, da es bis jetzt kein System gibt, das den obengenannten Erfordernissen in jedem Fall entspricht.

Das Ziel der vorliegenden Erfindung bestand darin, weitere nichtionische Emulgatoren aufzufinden, die in geringen Mengen allein oder im Gemisch mit anionischen Tensiden eingesetzt eine optimale Emulgierung einer möglichst breiten Palette von Pflanzenschutzmitteln ermöglichen, die pflanzenverträglich, gegenüber den Wirkstoffen inert und möglichst nicht toxisch sind, und die gebrauchsfertige Emulsionen bzw. Dispersionen ergeben, die mindestens 6 Stunden stabil sind.

Dieses Ziel wurde mit Verbindungen der Formel I erreicht, wie sie gemäss dem Patentanspruch definiert sind.

Verbindungen der Formel I, bei denen $R^1$ bzw. $R^2$ die definitionsgemässen Phenoxy- oder Naphthoxyreste bedeuten, sind aus der DE-OS 28 39 463 als Emulgatoren schon bekannt. Die Möglichkeit ihrer Verwendung als Emulgatorkomponente in Pflanzenschutzmittelformulierungen konnte aber dennoch nicht naheliegen, da in der erwähnten Publikation diese Tenside beispielhaft nur als Emulgatoren bzw. Dispergatoren in Druckpasten beschrieben sind, die bekanntlich Verdickungsmittel enthalten, welche der Paste die für ihre Anwendung nötige hohe Viskosität verleihen.

Damit enthält aber diese Literaturstelle keinen Hinweis darauf, dass damit auch dünnflüssige Emulsionen, wie sie für die Ausbringung von Pflanzenschutzmitteln, z.B. mittels Spritzmaschinen benötigt werden, erhältlich sind, die über 6 Stunden stabil sind. Bei dickflüssigen, hochviskosen Emulsionen muss naturgemäss eine gute Lagerstabilität auch mit solchen Emulgatoren zu erreichen sein, die dies bei dünnflüssigen Emulsionen an sich nicht gewährleisten.

Ausserdem enthält die Literaturstelle auch nicht den Hinweis, dass die Mittel auch zusammen mit anionischen Komponenten eingesetzt werden – eine solche Massnahme ist bei Druckpasten sogar schädlich – und schliesslich lehrt

sie auch den Einsatz von Entschäumern, was darauf schliessen lässt, dass die Emulgatoren zu stark schäumen, bzw. allein nicht in der Lage sind, Schaumbildungen zu unterdrücken. Eine starke Schaumbildung ist aber einer ordnungsgemässen Ausbringung von Wirkstoff-Emulsionen sehr hinderlich. Eine Schaumbildung konnte bei der erfindungsgemässen Verwendung jedoch nicht beobachtet werden.

Schliesslich war auch nicht zu erwarten, dass, wie schon oben ausgeführt, diese Stoffklasse sich ebenfalls wie die reinen Alkylphenolalkoxylate gemäss DE-AS 20 53 356 für Pflanzenschutzmittelkonzentrate eignen würden, da diese von aliphatischen Alkoholderivaten sich ableitenden Nonionics hinsichtlich ihrer Verträglichkeit mit Pflanzen und Wirkstoffen nicht ohne weiteres dieselben Eigenschaften erwarten liessen.

Die Herstellung der erfindungsgemäss zu verwendenden nichtionischen Emulgatoren ist einfach und geschieht beispielsweise in der Weise, dass man ein Phenol oder Naphthol bzw. ein einkerniges aromatisches Amin (substituiertes oder nichtsubstituiertes Anilin) zunächst mit Alkalihydroxiden behandelt und anschliessend mit Epichlorhydrin umsetzt. Die erhaltenen 1.3 disubstituierten Glycerinäther bzw. 1.3-Diaminoalkohole werden anschliessend mit Ethylenoxid allein und gegebenenfalls anschliessend Propylenoxid oder umgekehrt alkoxyliert.

Diese Reaktionsschritte sind bekannt und bedürfen keiner weiteren Erläuterung – zum besseren Verständnis sei auf die speziellen Herstellungsbeispiele verwiesen.

In den Formulierungen können die Emulgatoren allein, vorzugsweise aber im Gemisch mit anionischen Tensiden eingesetzt werden, von denen vor allem Mono- oder Dialkylbenzolsulfonate mit 8 bis 12 C-Atomen pro Alkylgruppe in Form ihrer Erdalkalimetallsalze, vorzugsweise Calciumsalze zu nennen sind. Das Mischungsverhältnis Nonionic zu anionischem Tensid soll vorzugsweise 75:25 bis 30:70 betragen, jedoch sollten, bezogen auf das Gemisch mindestens 30 Gew.% der nichtionischen Komponente anwesend sein.

Die Formulierung der Pflanzenschutzmittel erfolgt in der Weise, dass man dem Pflanzenschutzmittel, das in Substanz oder als 10 bis 90-, vorzugsweise 40 bis 85 gew.%ige Lösung in einem organischen inerten Lösungsmittel vorliegt, dessen Siedepunkt zwischen 80 und 200°C liegt, und von denen vorzugsweise Xylole, Toluol, und andere aromatische oder aliphatische Lösungsmittel (Benzinfraktionen), die für die Formulierung von Pflanzenschutzmitteln üblicherweise verwendet werden, zu nennen sind, 2 bis 15, vorzugsweise 3 bis 8 Gew.% des erfindungsgemässen Emulgatorsystems zufügt. Das System kann als Substanz oder in Form einer 20 bis 85%igen Lösung in einem polaren Lösungsmittel wie Alkoholen mit 3 bis 8 C-Atomen, Dimethylformamid oder N-Methylpyrrolidon vorliegen.

Das auf diese Weise hergestellte Pflanzenschutzmittelemulsionskonzentrat kann vom Anwender leicht zur anwendungsfertigen Brühe mit Wasser verdünnt werden, die länger als 6 Stunden haltbar ist und selbst in hartem Wasser keine Aufrahmungen oder Bodensätze zeigt. Man kann z.B. bis zu 0,1%ige Emulsionen herstellen. I.a. stellt man 0.2 bis 2 gew.%ige Wirkstoff-Emulsionen her. Aus der folgenden Tabelle 1 sind nichtionische Emulgatoren ersichtlich, die beispielsweise eingesetzt werden können:

Tabelle 1: Verbindungen der Formel I

| Nr. | $R^1$ | $R^2$ | n | m |
|---|---|---|---|---|
| 1 | 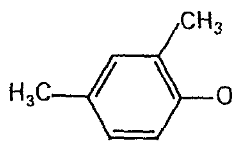 | $R^1=R^2$ | 5,5 | 0 |
| 2 | 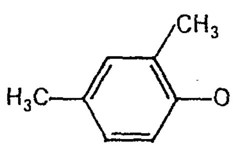 | $R^1=R^2$ | 8,0 | 0 |
| 3 | 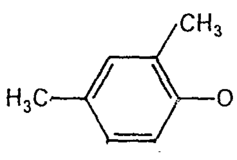 | $R^1=R^2$ | 10,0 | 0 |

Tabelle 1: Verbindungen der Formel I (Fortsetzung)

| Nr. | $R^1$ | $R^2$ | n | m |
|---|---|---|---|---|
| 4 | 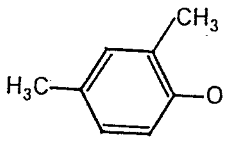 | $R^1=R^2$ | 12,0 | 0 |
| 5 | 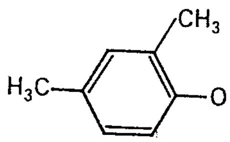 | $R^1=R^2$ | 16,0 | 0 |
| 6 | 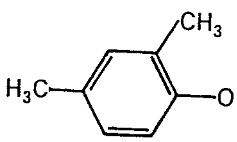 | $R^1=R^2$ | 18,0 | 0 |
| 7 | 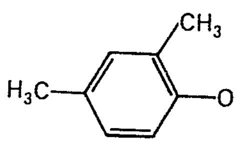 | $R^1=R^2$ | 19,5 | 0 |
| 8 | 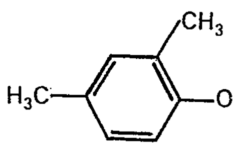 | $R^1=R^2$ | 22,0 | 0 |
| 9 | 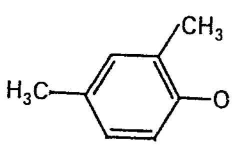 | $R^1=R^2$ | 23,0 | 0 |
| 10 | 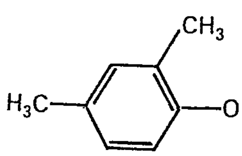 | $R^1=R^2$ | 27,0 | 0 |
| 11 | 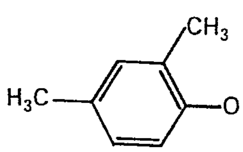 | $R^1=R^2$ | 32,5 | 0 |
| 12 | 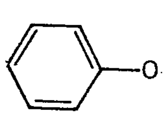 | $R^1=R^2$ | 18,0 | 0 |

Tabelle 1: Verbindungen der Formel I (Fortsetzung)

| Nr. | $R^1$ | $R^2$ | n | m |
|---|---|---|---|---|
| 13 | 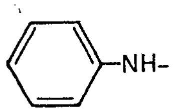 | $R^1=R^2$ | 17,5 | 0 |
| 14 | 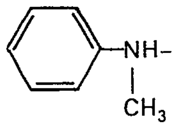 | $R^1=R^2$ | 17,0 | 0 |
| 15 | 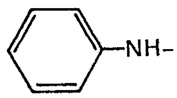 | 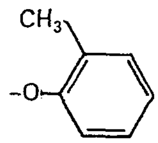 | 18,5 | 0 |
| 16 | 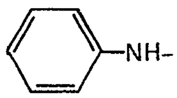 | 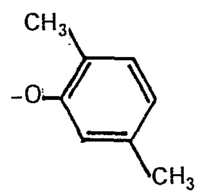 | 17,0 | 0 |
| 17 | 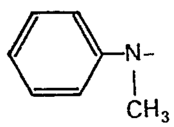 | 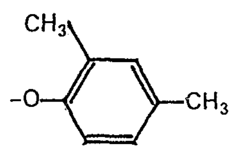 | 17,0 | 0 |
| 18 | 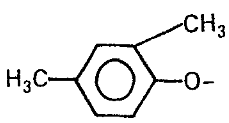 | $R^1=R^2$ | 0 | 15 |
| 19 | 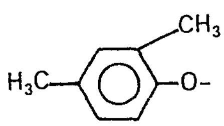 | $R^1=R^2$ | 0 | 5 |
| 20 | 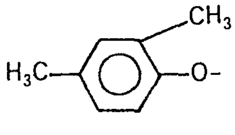 | $R^1=R^2$ | 18 | 4,5 |
| 21 | 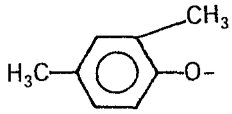 | $R^1=R^2$ | 18 | 5 |

Beispiele

I

610 Teile (5 Mol) 2,4-Dimethylphenol und 300 $cm^3$ Dioxan werden unter Rühren auf eine Temperatur in dem Bereich zwischen 30 und 50°C erwärmt und bei dieser Temperatur mit 110 Teilen (2,75 Mol) Natriumhydroxidpulver versetzt. Die

Temperatur wird dann auf 90–95°C erhöht. Das Gemisch wird 2 Stunden bei dieser Temperatur gerührt. Dann lässt man 231 Teile (2,5 Mol) Epichlorhydrin im Verlauf von 30 Minuten zulaufen und erhitzt die Mischung anschliessend 4 Stunden unter Rückfluss. Das ausgefallene Kochsalz wird abfiltriert und das Dioxan im Vakuum abdestilliert. Man erhält 688 Gewichtsteile 1,3-Bis-(2,4-dimethylphenyl)-glycerinether.

II

300 Teile (1 Mol) 1,3-Bis-(2,4-dimethylphenyl)glycerinether werden mit 2 Teilen Kaliumhydroxid versetzt und in einem Rührautoklaven mit 88 Teilen (2 Mol) Ethylenoxid, das portionsweise zugegeben wird, bei Temperaturen im Bereich von 110–120°C zur Reaktion gebracht. Der Druck beträgt zwischen 4 und 9 bar. Man erhält 386 Teile einer schwachgelben pastösen Substanz.

Herstellung von erfindungsgemässen Verbindungen gemäss Tabelle 1

Nr. 1 bis 11:

Nach der unter II beschriebenen Verfahrensweise wurden die angegebenen Bisphenylglycerinether mit Ethylenoxid umgesetzt. Der Ethoxilierungsgrad n ist in der Tabelle 2 angegeben. Diese Zahl besagt, dass 1 Mol des Hydroxylgruppen-enthaltenden 1,3-Bisarylglycerinethers mit der n-fachen Molmenge an Ethylenoxid umgesetzt wurde.

Tabelle 2

| Nr. | n | Teile Ethylenoxid/Mol Bisphenylglycerinether |
|---|---|---|
| 1 | 5,5 | 242 |
| 2 | 8,0 | 352 |
| 3 | 10,0 | 440 |
| 4 | 12,0 | 528 |
| 5 | 16,0 | 704 |
| 6 | 18,0 | 792 |
| 7 | 19,5 | 968 |
| 8 | 22,0 | 968 |
| 9 | 23,0 | 1012 |
| 10 | 27,0 | 1188 |
| 11 | 32,5 | 1430 |

Nr. 12

Analog zur Herstellvorschrift I wurden 470 Teile Phenol mit 231 Teilen Epichlorhydrin zur Umsetzung gebracht und 562 Teile 1,3-Bisphenylglycerinether erhalten. Der Ether wurde entsprechend der Vorschrift II mit 18 Molen Ethylenoxid zur Umsetzung gebracht.

Nr. 13

Zu 465 Teilen (5,0 Molteile) Anilin werden unter Rühren 66 Teile (1,65 Molteile) Natriumhydroxidpulver gegeben. Das Gemisch wird auf 90°C aufgeheizt. Bei dieser Temperatur lässt man 139 Teile (1,5 Molteile) Epichlorhydrin in 30 Minuten zulaufen und erhitzt das Gemisch anschliessend 7 Stunden unter Rückfluss. Man lässt es abkühlen, trennt das ausgefallene Natriumchlorid ab und destilliert das überschüssige Anilin ab. Es verbleiben 352 Teile 1,3-Dianilinopropanol-2 in Form einer viskosen Flüssigkeit.

121 Teile (0,5 Molteile) 1,3-Dianilinopropanol-2 werden mit 1,2-Teilen Kaliumhydroxid versetzt und in einem Rührautoklaven mit 390 Teilen (8,75 Molteilen) Ethylenoxid, das portionsweise aufgepresst wird, bei Temperaturen in dem Bereich von 110–125°C zur Reaktion gebracht. Der Druck beträgt zwischen 3 und 9 bar. Man erhält 515 Teile einer gelblichen viskosen Flüssigkeit.

Nr. 14

1070 Teile (10 Molteile) N-Methylanilin werden auf 70°C erhitzt. Bei dieser Temperatur tropft man innerhalb von 90 Minuten 925 Teile (10 Molteile) Epichlorhydrin zu. Anschliessend steigert man die Temperatur auf 80°C und rührt das Reaktionsgemisch 3,5 Stunden bei dieser Temperatur. Dann lässt man es auf Raumtemperatur abkühlen und tropft innerhalb von 45 Minuten bei 20°C 880 Teile (11,0 Molteile) 50%ige Natronlauge zu. Man lässt über Nacht bei Raumtemperatur rühren und erhält nach Abtrennen des entstandenen Kochsalzes und des Wassers 1596 Teile N-Methylanilinoglycidylamin als hellgelbe Flüssigkeit, deren Epoxidgehalt 95% beträgt.

1585 Teile (9,7 Molteile) N-Methylanilinoglycidylamin werden mit 2082 Teilen (19,5 Molteilen) N-Methylanilin und und 62 Teilen Natriummethylat vermischt und unter Stickstoffatmosphäre auf 200°C unter Rühren erhitzt. Man erhitzt 6 Stunden unter Rückfluss und destilliert anschliessend das überschüssige N-Methylanilin ab. Man erhält das 1,3-Di-(N-methylanilino)propanil-2 als hellbraune feste Substanz mit einem Schmelzpunkt von 78–80°C.

94,5 Teile (0,35 Molteile) 1,3-Di-(N-methylanilino)propanil-2 werden mit 0,9 Teilen Kaliumhydroxid versetzt und in einem Rührautoklaven mit 264 Teilen (6 Molteilen) Ethylenoxid portionsweise bei Temperatur im Bereich von 120–125°C zur Reaktion gebracht. Der Druck beträgt zwischen 4 und 8 bar. Man erhält 358 Teile einer gelblichen festen Substanz, die wasserlöslich ist.

Nr. 15

186 Teile Anilin (2 Mol) werden auf 80°C erhitzt und innerhalb von 50 Minuten 185 Teile Epichlorhydrin (2 Mol) zugetropft. Man rührt 4 h bei 195°C nach; dann gibt man bei 80°C zunächst 244 Teile 2,4-Dimethylphenol (2 Mol), schliesslich 176 Teile 50%ige Natronlauge (2,2 Mol) zu erhitzt für 8 h auf 110°C. Man kühlt ab, gibt 250 Teile Wasser zu, rührt 1/2 Stunde weiter und trennt die Phasen im Scheidetrichter. Am Rotationsverdampfer entfernt man bei 80°C/20 Torr enthaltendes Restwasser. Schliesslich wird analog zur Vorschrift II mit 1628 Teilen Ethylenoxid bei 120°C im Autoklaven umgesetzt. Man erhält so 2144 Teile als gelbe pastöse Substanz.

Nr. 16

Analog zur Vorschrift Nr. 15 werden 186 Teile Anilin mit 185 Teilen Epichlorhydrin und 244 Teilen 2,5-Dimethylphenol zur Umsetzung gebracht. Man erhält 525 Teile eines Glycerinetheramins, das entsprechend Vorschrift II mit 1496 Teilen Ethylenoxid oxethyliert wird. Man erhält so 2116 Teile einer gelben pastösen Substanz.

Nr. 17

214 Teile (2,0 Molteile) N-Methylanilin werden auf 75°C erhitzt. Innerhalb von 30 Minuten lässt man unter Rühren 185 Teile (2,0 Molteile) Epichlorhydrin zutropfen. Nach der Zugabe des Epichlorhydrins rührt man das Reaktionsgemisch noch 4,5 h bei 90–95°C.

Man lässt es dann auf 50°C abkühlen und gibt portionsweise 244 Teile (2,0 Molteile) 2,5-Dimethylphenol zu. Danach lässt man 176 Teile 50%ige Natronlauge (2,2 Molteile) innerhalb von 15–20 Minuten zutropfen. Anschliessend erhitzt man das Reaktionsgemisch auf 110°C und rührt 8 h bei dieser Temperatur.

Man lässt es dann auf 50°C abkühlen und wäscht das entstandene Kochsalz mit 250 Volumenteilen Wasser aus. nach dem Abtrennen des Wassers erhält man 565 Teile einer bräunlichen viskosen Flüssigkeit.

114 Teile (0,4 Molteile) dieser Flüssigkeit werden mit 1 Teil Kaliumhydroxid versetzt und in einem Rührautoklaven mit 299 Teilen (6,8 Molteile) Ethylenoxid bei 120–125°C und 4–9 bar zur Reaktion gebracht. Man erhält 411 Teile einer wasserlöslichen viskosen Substanz.

Diese oben aufgeführten und beschriebenen Substanzen der allgemeinen Formel

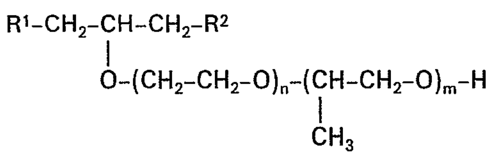

oder

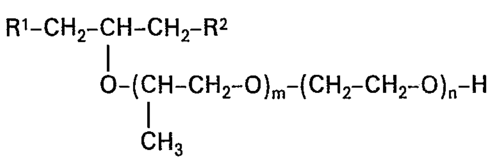

eignen sich sehr gut als nichtionische Emulgatoren im erfindungsgemässen Sinne.

Vorteilhaft zeigt sich insbesondere bei Emulsionskonzentratformulierungen fester Wirkstoffe, die extrem stark zur Kristallisationsbildung in den Emulsionen neigen, der deutlich kristallisationsverzögernde Effekt bei Einsatz der neuen oberflächenaktiven Stoffe.

Im Vergleich zu bisher üblichen nichtionogenen Emulgatoren gemäss den eingangs genannten Publikationen zeigen die obengenannten Substanzen gleich gute und z.T. bessere Emulgiereigenschaften.

Beispiel 1

Herbizider Wirkstoff: 2,4-D-Isooctylester

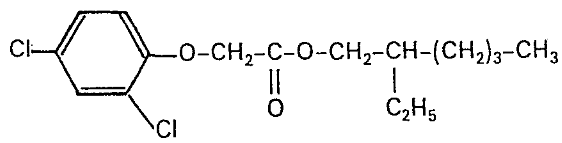

wurde als Emulsionskonzentrat wie folgt formuliert:

47,0% Wirkstoff
0,8–2,4% Ca-Dodecylbenzolsulfonat
1,6–3,2% Substanzen der Nr. 2, 4 und 5–17 und 20, 21
ad 100,0% Petroleum

Die Überprüfung der Emulsionsstabilität einer 0,2 und 2.0%igen Emulsion bei Raumtemperatur über einen Zeitraum von 6 Stunden zeigte ein einwandfreies Verhalten.

Beispiel 2

Herbizider Wirkstoff folgender Formel:

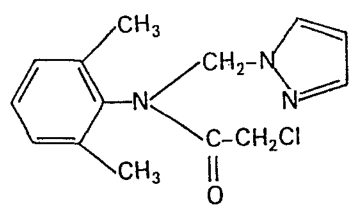

wurde als Emulsionskonzentrat wie folgt formuliert:

20% Wirkstoff
5% Ca-Dodecylbenzolsulfonat
5% Rizinusöl × 48 Ethylenoxid
ad 100% Xylol

Die Emulsion, 0,2 und 2,0%ig, zeigt nach 1–2 Stunden bei Raumtemperatur und nach ca. 1/2 Stunde bei 10°C eine extrem starke Kristallisationsbildung.

Setzt man anstelle des ethoxylierten Rizinusöls die Substanz Nr. 6 aus Tabelle 1 in der gleichen Konzentration von 5% ein, so zeigt sich selbst nach 10 Stunden bei 10°C keine Kristallisationsbildung.

Eine vergleichbar gute Emulsionsstabilität zeigt sich auch bei Einsatz der Substanzen mit den Nr. 2–5, 7–12, 14 und 21 in einer Menge von 1–8% je nach Ethoxylierungsgrad.

Beispiel 3

Der insektizide Wirkstoff Dimethoat (Handelsprodukt Perfekthion) folgender Formel:

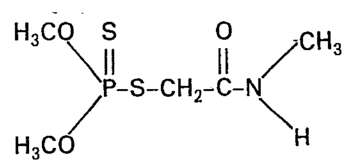

wurde als Emulsionskonzentrat wie folgt formuliert:

40% Wirkstoff
5% Cyclohexanon
8% Substanzen der Nr. 3, 5–17 und 19–21
ad 100% Xylol

Die Menge beträgt hierbei konstant 8% und zeigt keine Abhängigkeit vom Ethoxylierungsgrad. Die Emulsionen (0,2 und 2,0%ig) sind über einen Zeitraum von 6 Stunden einwandfrei.

Beispiel 4

Ein weiterer insektizider Wirkstoff, das Lindan (Handelsprodukt Perfekthan Fluid) folgender Formel:

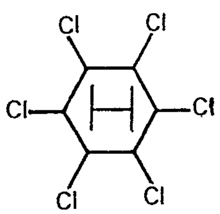

wurde als Emulsionskonzentrat wie folgt formuliert:

20% Wirkstoff
1–3% Ca-Dodecylbenzolsulfonat
1–3% Substanzen der Nr. 5, 8, 10, 11 und 21
ad 100% Xylol

Die Emulsionsstabilität ist über einen Zeitraum von 6 Stunden einwandfrei.

Beispiel 5

Das Malathion, ebenfalls ein insektizider Wirkstoff folgender Formel:

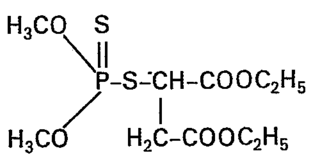

wurde wie folgt als Emulsionskonzentrat formuliert:

40% Wirkstoff
1–2% Ca-Dodecylbenzolsulfonat
1–2% Substanzen der Nr. 3–5, 14, 17, 20 und 21
ad 100% Xylol

Die Emulsionsstabilitäten sind einwandfrei

Beispiel 6

Als fungizider Wirkstoff wurde folgende Substanz eingesetzt:

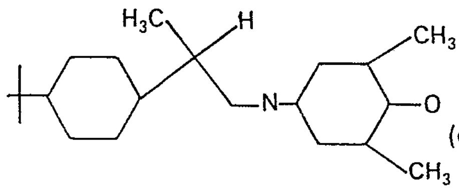

(cis-Form)

Das Emulsionskonzentrat hat folgende Zusammensetzung:

50% Wirkstoff
2–6% Ca-Dodecylbenzolsulfonat
4–8% Substanzen der Nr. 2–11, 20 und 21
ad 100% Cyclohexanon

Beispiel 7

Es wurden Schwefel-Suspensionskonzentrate (p=1,45 g/cm²) folgender Rezepturen unter Verwendung der in Tabelle 1 aufgeführten Substanzen hergestellt, wobei die Teilchengrösse des Schwefels durch entsprechende physikalische Methoden auf einen Wert von $\geqslant 90\% < 2\,\mu$ gebracht wurde:

55% Schwefel
5% Antifrostmittel
3,5% Dispergiermittel
2% ethoxyliertes Nonylphenol
2% Inertmaterial

sowie jeweils 2% folgender o.g. Substanzen Nr. 3 und 5–17 und mit Wasser ad 100% aufgefüllt.

Es wurden 0,2 und 2,0%ige Suspensionen hergestellt.

Die Suspensionsstabilität bei allen Proben war bei Raumtemperatur über 6 Stunden einwandfrei.

**Patentanspruch**

Verwendung von Verbindungen der Formel I

$$R^1\text{-}CH_2\text{-}\underset{\displaystyle OR^3}{\underset{|}{CH}}\text{-}CH_2\text{-}R^2 \qquad \text{I}$$

$R^1$ und $R^2$ gleiche oder verschiedene Reste, und zwar

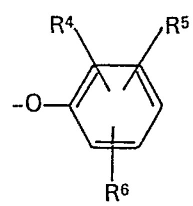 , 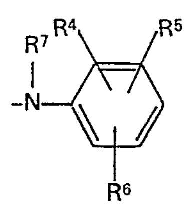

-O-α-Naphthyl oder -O-β-Naphthyl,

$R^4$, $R^5$, $R^6$ gleiche oder verschiedene Reste, und zwar
H, $C_1$- bis $C_{12}$ Alkyl oder $C_7$ bis $C_{10}$-Aralkyl, $R_7$ ein Wasserstoffatom oder Methyl und
$R^3$ Reste der Formeln II oder III

$-(C_2H_4O)_n(CH-CH_2-O)_mH$ II
|
$CH_3$

$-(CH-CH_2-O)_m(C_2H_4O)_nH$ III
|
$CH_3$

mit n = 0 bis 50 und m = 0 bis 50 mit der Massgabe, dass m oder n mindestens 5 ist, bedeuten, als nichtionische Öl-in-Wasser-Emulgatorkomponente für Pflanzenschutzmittel-Formulierungen.

**Claim:**

The use of a compound of the formula I

$R^1-CH_2-CH-CH_2-R^2$
|
$OR^3$

where $R^1$ and $R^2$ are identical or different and each is

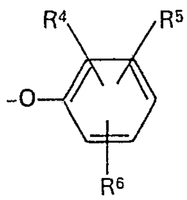
,
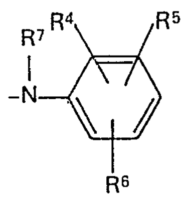
,

-O-α-naphthyl or

O-β-naphthyl, where $R^4$, $R^5$ and $R^6$ are identical or different and each is H, $C_1$-$C_{12}$-alkyl or $C_{7}$-$C_{10}$-aralkyl, and $R^7$ is hydrogen or methyl and

$R^3$ is a radical of the formula II or III

$-(C_2H_4O)_n(C_3H_6O)_mH$ II

$-(C_3H_6O)_m(C_2H_4O)_nH$, III

where n is a number from 0 to 50 and m is a number from 0 to 50, with the proviso that m or n is 5 or more, as a non-ionic oil-in-water emulsifier component for crop protection formulations.

**Revendication**

Utilisation, comme composants d'émulsifiant huile-dans-eau, non ioniques, pour formulation de pesticides, de composés de formule I

$R^1-CH_2-CH-CH_2-R^2$ I
|
$OR^3$

dans laquelle
$R^1$ et $R^2$ représentent des restes identiques ou différents, à savoir:

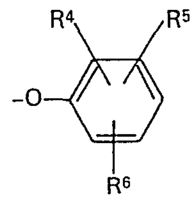
,
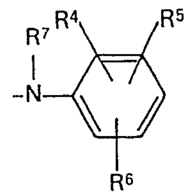
,

-O-α-naphtyle ou -O-β-naphtyle

$R^4$, $R^5$, $R^6$ des restes identiques ou différents, à savoir, H, alkyle en $C_1$ à $C_{12}$, ou aralkyle en $C_7$ à $C_{10}$, $R_7$ un atome d'hydrogène ou méthyle,

$R^3$ des restes de formule II ou III

$-(C_2H_4O)_n(CH-CH_2-O)_mH$ II
|
$CH_3$

$-(CH-CH_2-O)_m(C_2H_4O)_nH$ III
|
$CH_3$

avec n = 0 à 50 et
m = 0 à 50, sous réserve que m ou n soit au moins 5.